# EUROPEAN PATENT APPLICATION

(11) **EP 1 793 077 A2**
(43) Date of publication of application: **06.06.2007**
(21) Application number: 06381050.1
(22) Date of filing: 22.11.2006
(51) Int. Cl.: E06C 7/00

(54) **Portable ladder with built-in spirit level**

(30) Priority: 28.11.2005 ES 200502610 U
(71) Applicant: Patrimonial Bernaus, S.L., 25320 Anglesola (Lleida) (ES)
(72) Inventor: Jaume, Casteras Farré, 25320, Anglesola (Lleida) (ES)
(74) Representative: Urizar Anasagasti, Jesus Maria

(57) **Abstract**

A portable ladder with a built-in level; comprising rungs (11) fixed at their ends to considerably parallel strings or legs (12); having one of the rungs (11) a cavity (13) open at its upper part in which a transparent or translucent casing (21) housing self-orienting means in vertical direction is embedded, having said casing (21) a dished upper surface (24) in a front direction and in a side direction and being provided with a graduated two-way scale (25) for the simultaneous indication of the inclination of the ladder (1) in a front direction and in a side direction, the casing (21) forming a two-way level (2) with the self-orienting means housed therein.

## Description

### Object of the Invention

The present invention relates to a portable ladder with built-in level.

### Background of the Invention

There are currently several types of portable ladders on the market that are used both at an industrial and domestic level. These ladders generally have two parallel strings or stringers with one or more sections and a plurality of intermediate rungs or crosspieces for the user to move up and down.

When these ladders are used, they rest with the lower end on the ground or any other surface and they rest at the front part against a wall, beam or the like, or on a leg or extension of the ladder itself, such that the ladder is arranged with a certain inclination toward the front and as vertical as possible in the sideways direction.

These ladders have a limited and variable loading capacity depending on the support angle with which it is placed. Thus, if the ladder has a very acute angle with respect to the vertical, it supports the weight by bending and not by compression, considerably reducing its loading capacity or maximum strength. Furthermore, there is the risk that the ladder may slip on any of the support surfaces, with the risk of the ladder and the user falling.

On the contrary, if the ladder is too vertical, it is possible that when the user goes up or when he/she leans backwards to carry out any task, the ladder may move away from the wall and tip backwards which is also a risk for the user.

Another problematic situation occurs in the event that the ground is uneven because the ladder is not supported correctly or it leans sideways, a side slipping of the upper end with respect to the wall or surface of side support being able to occur with the subsequent sideways fall of the ladder and the user.

The positioning of the ladder in the use position is generally carried out by sight or intuitively by the user, a large number of accidents and deaths occurring due to the fall of the ladder due to an incorrect positioning, in some cases because of the excessive confidence of the experienced user and in other cases because of the lack of experience of the user.

Therefore, the technical problem set forth is the development of a ladder incorporating means which allow knowing both its front and side inclination so as to facilitate the suitable positioning thereof, eliminating the risk of slipping and fall of the ladder due to an excessive front or side inclination.

### Description of the Invention

The portable ladder with a built-in level has features aimed at providing a simultaneous visual indication of the front inclination and the side inclination of the ladder, having to that end a two-way level embedded in a nondetachable manner in one of the rungs of the ladder.

According to the invention, the ladder is of the type comprising rungs fixed at their ends to considerably parallel strings or legs and it has the peculiarity of having a cavity, open at the upper part, for the embedded assembly of a transparent or translucent casing housing self-orienting means in a vertical direction.

Said casing has a dished upper surface both in the front direction and in the side direction, said upper surface being provided with a graduated two-way scale which allows knowing the inclination of the ladder in the front direction and the side direction simultaneously by means of observing the position of the self-orienting means with respect to the two-way scale.

The mentioned casing forms a two-way level together with the self-orienting means housed therein, which allows knowing the front and side inclination of the ladder permanently, facilitating its quick relocation in a suitable position for its safe use.

The casing has at its side part flexible pins tending to maintain themselves in a projecting position and facing the inner surface of the rung, said flexible pins forming the means for retaining the two-way level in the coupling position with the rung. These pins allow carrying out a fast assembly of the two-way level in the rung of the ladder, it being enough to introduce the level head-on in the cavity defined in the rung, and its retention is stable in the assembly position without needing to use screws or other additional fixing elements.

Said casing has at its side part recesses for concealing the flexible flanges when the latter are deformed elastically towards the inside of the casing, which occurs during the introduction of the casing into the cavity of the rung.

The self-orienting means in a vertical direction can be formed by an air bubble delimited by a liquid contained inside the casing.

According to the invention, in the assembly position, the portion of the casing of the two-way level is visible through the opening of the rung and is considerably flush with the outer surface of the rung, such that it is not any hindrance during the normal use of the ladder.

The casing of the two-way level is formed by a high-strength material in order to ensure its durability, although it may be stepped on by the user when he/she moves up or down the ladder.

It has also been foreseen that the cavity for the embedded positioning of the two-way level is defined in the middle area of the rung whereby it is achieved that on one hand it is displaced from the side areas on which the feet are most frequently supported and on the other hand that it remains visible during the use of the ladder although the user keeps his/her feet supported on the level-carrying rung.

### Description of the Figures

To complement the description which is being made and for the purpose of aiding to better understand the features of the invention, a set of drawings is attached to this specification in which the following has been depicted with an illustrative and non-limiting character:

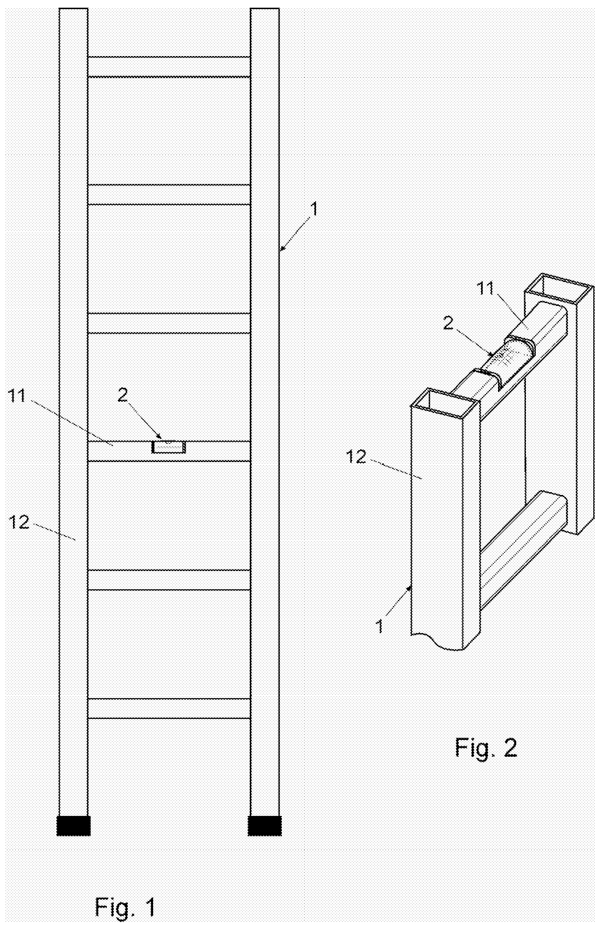

Figure 1 shows a schematic elevational view of an embodiment of the portable ladder having a single section, with a built-in level.
Figure 2 shows a perspective detail of a portion of the ladder of the previous figure.
Figure 3 shows a perspective view of the level removed from the ladder and facing the cavity defined in the rung for its embedded fixing.
Figure 4 shows a profile view of the two-way level-carrying rung sectioned transversely by a vertical plane.
Figure 5 shows an elevational view of the two-way level-carrying rung sectioned longitudinally by a vertical plane
Figure 6 shows a partial view of the ladder, seen from the side, sectioned by a vertical plane and in the use position, the bubble of the two-way level marking the front inclination of the ladder being observed in this figure.
Figure 7 shows a partial front elevational view of the ladder sectioned by a vertical plane and in the use position, the bubble of the two-way level marking the side inclination of the ladder being observed in this figure.

### Preferred Embodiment of the Invention

The example shown in the figures shows a portable ladder having a single section, with reference number (1) as a whole, comprising tubular rungs (11) fixed at their ends to also tubular strings (12). One of the rungs (11) has in its middle area a cavity (13) having a single section and open at the upper part (1) by means of a cut or machining affecting an upper portion of the tubular body of the rung.

In the cavity (13) of the rung (11) there is housed a two-way level (2) comprising a casing (21) of a translucent or transparent high strength material, for example polycarbonate, containing self-orienting means in vertical direction; in the example shown, these self-orienting means are represented by an air bubble (23) delimited by a liquid (22) contained in the casing (21).

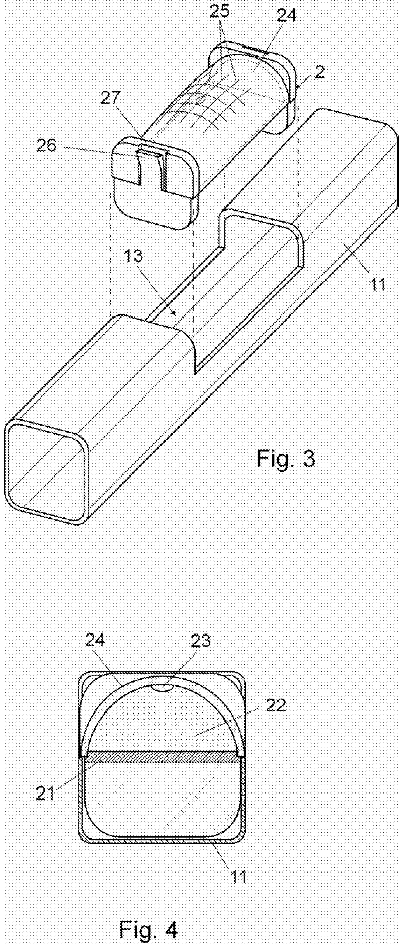

The casing (21) has a dished upper surface in the front direction and the side direction, as can be seen in figures 3, 4 and 5.

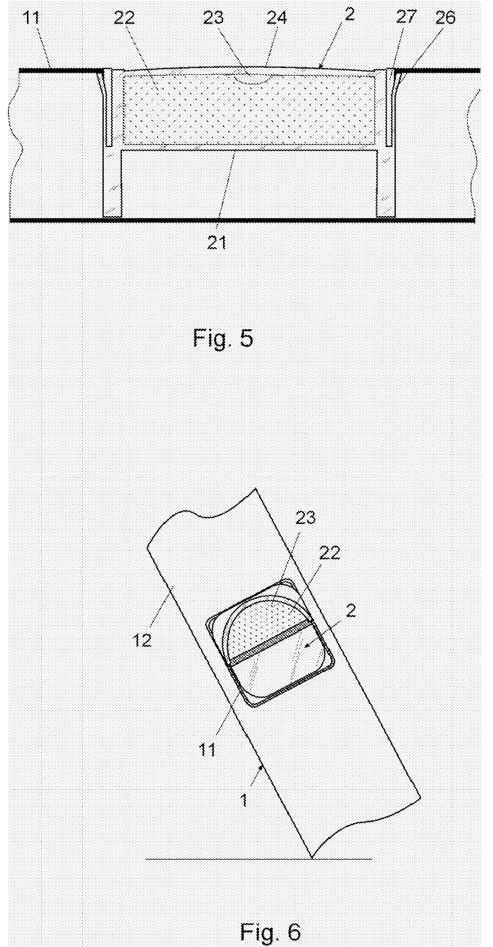

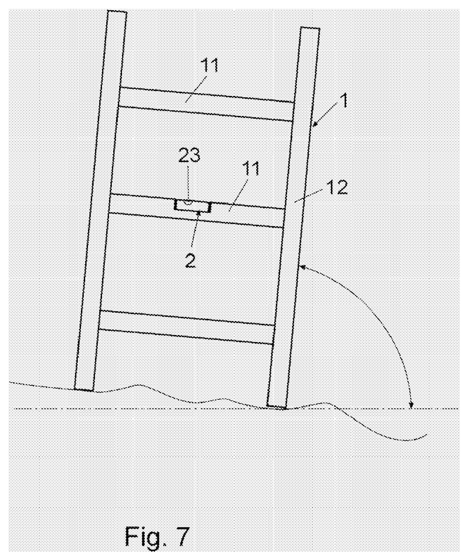

Said upper surface (24) is provided with a two-way scale (25) which, in combination with the bubble (23), allows knowing the front inclination (Figure 6) and the side inclination (Figure 7) of the ladder simultaneously.

With the incorporation of the two-way level (2) in the rung (11), the user can know the front and side inclination of the ladder simultaneously, and can relocate the ladder until said inclinations are within limits which allow ensuring its safe use.

As can be seen in Figure 5, the level (2) is simply retained inside the cavity (13) by flexible pins (26) defined in the side of the casing (21) and facing the inner surface of the rung (11), preventing its removal.

As can be deduced from figure 3, the assembly of the two-way level (2) in the rung (11) is carried out by introducing it head-on in the cavity (13) of the rung and so that the flexible pins (26) are not a hindrance during the assembly operation, the casing (21) has at its side part recesses (27) for the temporary concealment of said flexible flanges (26).

Having sufficiently described the nature of the invention as well as a preferred embodiment, it is stated for all intents and purposes that the materials, shape, size and arrangement of the described elements can be modified, provided that this does not entail an alteration of the essential features of the invention that are claimed below.

## Claims

1. A portable ladder with a built-in level; of the type comprising rungs (11) fixed at their ends to considerably parallel strings or legs (12); **characterized in that** one of the rungs (11) has a cavity (13) open at its upper part in which a transparent or translucent casing (21) housing self-orienting means in vertical direction is embedded, said casing (21) having a dished upper surface (24) in a front direction and in a side direction and being provided with a graduated two-way scale (25) for the simultaneous indication of the inclination of the ladder (1) in a front direction and in a side direction, the casing (21) forming a two-way level (2) with the self-orienting means housed therein.

2. A ladder according to claim 1, **characterized in that** the casing (21) has at its side part flexible pins (26) facing the inner surface of the rung (11) and forming the means for retaining the two-way level in the coupling position with the rung (11).

3. A ladder according to claim, **characterized in that** the casing (21) has at its side part recesses (27) for the concealment of the flexible flanges by means of elastic deformation during the introduction of the casing into the upper cavity of the rung.

4. A ladder according to claim 1, **characterized in that** the self-orienting means in vertical direction are formed by an air bubble (23) delimited by a liquid (22) contained in the casing (21).

5. A ladder according to claim 1, **characterized in that** the casing (21) has at its side part projecting flexible pins (26) facing the inner surface of the rung (21).

6. A ladder according to claim 6, **characterized in that** the casing (21) has at its side part, in correspondence with the flexible pins (26), recesses (27) for the concealment of the flexible pins during the assembly of the level.

7. A ladder according to claim 1, **characterized in that** the cavity (13) for the embedded positioning of the two-way level (2) is defined in the middle area of the rung (11).
